# EUROPÄISCHE PATENTSCHRIFT

(11) **EP 2 251 577 B1**
(45) Veröffentlichungstag und Bekanntmachung des Hinweises auf die Patenterteilung: **20.06.2012**
(21) Anmeldenummer: 10159973.6
(22) Anmeldetag: 15.04.2010
(51) Int. Cl.: F16K 31/04, F16K 31/53, H02K 7/08

(54) **Steuerventil**
Control valve
Soupape de commande

(30) Priorität: 13.05.2009 DE 102009003073
(43) Veröffentlichungstag der Anmeldung: 17.11.2010
(73) Patentinhaber: Robert Bosch GmbH, 70442 Stuttgart (DE)
(72) Erfinder: Reeb, Georg, 77815, Buehl Eisental (DE); Muschelknautz, Claudius, 77815, Buehl (DE)

(56) Entgegenhaltungen:
- EP-A1- 0 563 583
- EP-A1- 0 655 358
- DE-A1- 3 744 274
- DE-A1-102006 053 311
- US-A- 4 792 245
- US-A- 5 169 245

## Beschreibung

Die Erfindung betrifft ein Steuerventil für einen Kühlkreislauf einer Brennkraftmaschine, aufweisend ein zweiteiliges Ventilgehäuse, wobei ein Ventilgehäuseteil einstückig ausgeführt ist und das Ventilgehäuseteil einen Rotor aufweist, wobei der Rotor auf einer Rotorwelle einen ersten Bereich mit einer Schneckenverzahnung aufweist und einen zweiten Bereich mit einem Blechpaket aufweist, wobei am Rotor an den beiden Enden der Rotorwelle zwei axiale Lagerelemente angeordnet sind.

### Stand der Technik

Ein Kühlkreislauf eines Kraftfahrzeuges beinhaltet üblicherweise eine zu kühlende Wärmequelle, z.B. eine Brennkraftmaschine, die mittels eines Kühlmittels durch freie oder erzwungene Konvektion gekühlt wird. Die Temperaturdifferenz über der Wärmequelle ist vom Wärmeeintrag und von der Größe des Volumenstroms des Kühlmittels abhängig. Um einerseits die Brennkraftmaschine vor Überhitzen zu schützen und andererseits die Abwärme der Brennkraftmaschine beispielsweise zur Beheizung des Fahrgastraums eines Kraftfahrzeuges zu nutzen, wird in der Brennkraftmaschine ein Kühlmittel umgepumpt, das die überschüssige Wärmeenergie aus der Verbrennung aufnimmt und in gewünschten Maße abführt. Der Heiz- bzw. Kühlkreislauf umfasst in der Regel verschiedene Teilkreisläufe, wie beispielsweise einen Kühlerzweig, einen Bypasszweig und/oder einen Heizungswärmetauscherzweig. Über einen im Kühlerzweig angeordneten Kühler oder Radiator wird die überschüssige Wärmemenge des Kühlmittels an die Umgebung abgegeben. Ein Heizungswärmetauscher erwärmt die durch ihn strömende Luft zur Beheizung des Fahrgastraums.

Die Verteilung des Kühlmittelstroms auf die verschiedenen Zweige des Kühl- bzw. Heizungskreislaufes der Brennkraftmaschine wird üblicherweise durch ein Steuerventil gesteuert. Hierzu wird in der DE 10 2006 053 310 A1 vorgeschlagen die gewünschte Kühlmitteltemperatur wird durch Mischen eines gekühlten und eines ungekühlten Kühlmittelstrom einzustellen. Dazu wird ein Steuerventil verwendet, dessen Durchströmöffnungen durch ein Verdrehen durch einen Elektromotor veränderlich sind. Um die Durchströmöffnungen zu verstellen, ist in dem Steuerventil ein Elektromotor angeordnet, der über ein Schneckengetriebe die Position einer Steuerscheibe so verstellt, dass durch das Steuerventil ein gewünschter Kühlmittelstrom strömt. Der Elektromotor ist dabei zusammen mit einer Schneckenverzahnung auf einer Rotorwelle so angeordnet, dass auf der Rotorwelle ein Blechpaket mit Magneten durch ein vom Stator erzeugtes Wechselmagnetfeld mit Rotation versetzt wird. Durch die rotierende Rotorwelle wird über die Schneckenverzahnung ein Stirnrad angetrieben, welches die Steuerscheibe des Steuerventils verdreht. Der Rotor ist in einem Steuerventilgehäuseteil angeordnet und wird von Kühlmittel umflutet.

Üblicherweise wird der Rotor mittels zwei radialen Lagerelementen sowie zwei axialen Lagerelementen gelagert, wobei die Lagerelemente im Bereich der Enden der Rotorwelle angeordnet sind. Durch sinusförmige Anregungen, die als Harmonische der Motorordnungen sich in einem Frequenzbereich von bis zu 44 Hz erstecken, wird der Rotor in dem Steuerventil zum Schwingen angeregt. Dies führt zu einem erhöhten Verschleiss der axialen Lagerelementen des Steuerventils sowie der Schneckenverzahnung. Des Weiteren führt das Anprallen der Rotorwelle gegen ein axiales Lagerelement zu einer unerwünschten Geräuschemission, insbesondere im Bereich der Eigenfrequenzen des Rotors.

### Offenbarung der Erfindung

Es ist Aufgabe der Erfindung, ein Steuerventil bereitzustellen, das sowohl einen reduzierten Verschleiß an den axialen Lagerelementen und in der Schneckenverzahnung, aber auch eine geringere Geräuschemission aufweist.

Diese Aufgabe wird durch ein Steuerventil gemäß Anspruch 1 gelöst. Bevorzugte Ausführungsformen sind in den abhängigen Ansprüchen angegeben. Erfindungsgemäß wurde erkannt, dass der Verschleiß in der Schneckenverzahnung und an den axialen Lagerelementen sowie die Geräuschemissionen dadurch reduziert werden können, indem zumindest eines der axialen Lagerelemente durch eine Feder vorgespannt in einem Ventilgehäuseteil angeordnet ist.

Auf diese Weise werden die axialen Lagerelemente am Rotor angelegt und vorgespannt. Durch die Vorspannung liegt der Rotor des Steuerventils zuverlässig und der Lagerung und kann durch die Schwingungen, die aus der Brennkraftmaschine an der Rotor des Steuerventils übertragen werden, nur reduziert zu Eigenschwingungen angeregt werden. Dies hat den Vorteil, dass die Geräuschemissionen, die entstehen, wenn der Rotor an einem axialen Lagerelement anschlägt, vermindert sind.

Gemäß einer Ausführungsform der Erfindung ist die Feder dazu ausgelegt, etwa das 15- bis 90-fache der Masse des Rotors aufzunehmen. Dies hat den Vorteil, dass Schwingungen, die von der Brennkraftmaschine an das Steuerventil übergeben werden, und somit den Rotor des Steuerventils in Schwingungen versetzen, zuverlässig von der Feder aufgenommen werden können.

In einer weiteren Ausführungsform der Erfindung ist ein Ventilgehäuseinnenraum des Steuerventils mittels eines Spaltes zwischen den Umfangsflächen des axialen Lagerelementes und des Ventilgehäuseteils mit einem durch das axiale Lagerelement abgrenzenden Hohlraum verbunden. Auf diese Weise kann die kinetische Energie, die der Rotor in seiner Bewegung im Gehäuse mit sich führt, zumindest teilweise auf das Kühlmittel, das den gesamten Innenraum des Steuerventils durchflutet, übertragen werden. Dies hat zur Folge, dass das axiale Lagerelement Kühlmittel, durch die Verschiebung des an den axialen Lagerelement anliegenden Rotors, aus dem Hohlraum verdrängt und das Kühlmittel aus dem Hohlraum über ein Spalt in den Ventilgehäuseinnenraum strömt.

Gemäß einer weiteren Ausführungsform der Erfindung ist zumindest eines der axialen Lagerelemente plattenförmig ausgeführt. Dies hat den Vorteil, dass das axiale Lagerelement einfach herstellbar ist.

Gemäß einer weiteren Ausführungsform der Erfindung weist das Steuerventil zumindest einen Anschlag für eines der axialen Lagerelemente auf. Auf diese Weise ist sichergestellt, dass die Feder nicht überdrückt wird und die Verzahnungskräfte zuverlässig in das Ventilgehäuse geleitet werden.

Nachfolgend wir die Erfindung anhand von Figuren näher erläutert. Dabei zeigt:
Fig. 1 zeigt eine schematische Schnittansicht durch ein erfindungsgemäßes Steuerventil gemäß einer ersten Aufsführungsart; und
Fig. 2 zeigt eine schematische Schnittansicht durch ein Steuerventil gemäß einer zweiten Ausführungsform.

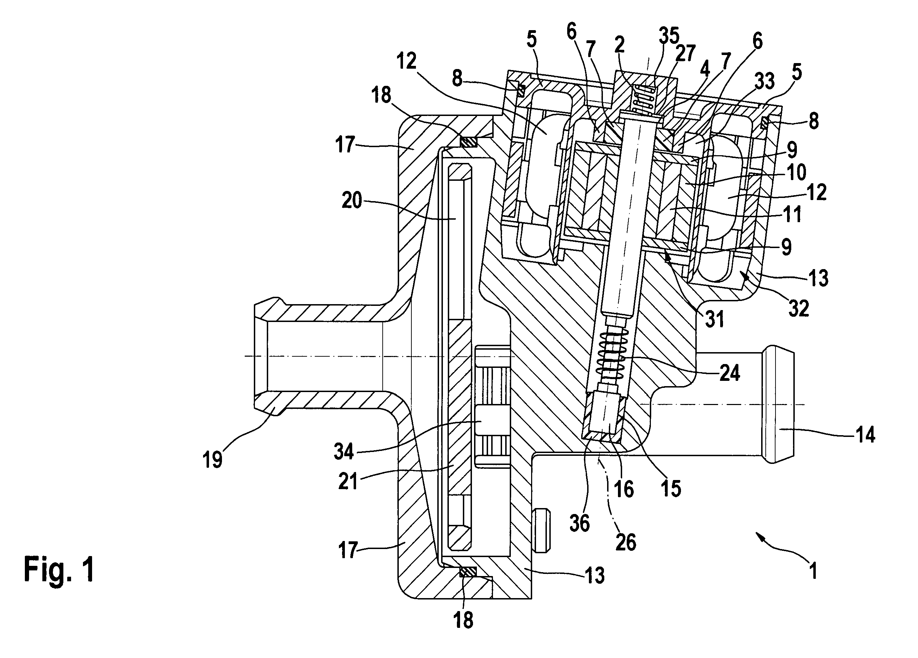

Fig. 1 zeigt eine schematische Schnittansicht durch ein erfindungsgemäßes Steuerventil 1 gemäß einer ersten Ausführungsform. Das Steuerventil 1 weist rechtsseitig einen ersten Flanschbereich 14 und linksseitig einen zweiten Flanschbereich 19 zum Anschluss von Kühlmittelleitungen an dem Steuerventil 1 auf. Die Längsachsen der jeweiligen Anschlüsse der beiden Flanschbereiche 14, 19 sind zueinander versetzt angeordnet. Der zweite Flanschbereich 19 ist dabei einstückig mit einem dritten Ventilgehäuseteil 17 verbunden. Der erste Flanschbereich 14 ist mit einem zweiten Ventilgehäuseteil 13 verbunden. In dem zweiten Ventilgehäuseteil 13 ist ein Rotor 31 und ein Stator 32 eines Elektromotors angeordnet. Der Rotor 31 weist eine Rotorwelle 16 auf, auf der in einem ersten Bereich eine Schneckenverzahnung 24 und in einem zweiten Bereich ein Blechpaket 10 angeordnet sind. Die paketierten Bleche des Blechpakets 10 umfassen dabei radial die Rotorwelle 16 und werden axial durch zwei Blechhülsen 9 begrenzt. In dem Blechpaket 10 ist zumindest ein Magnet 11 angeordnet. Das Blechpaket 10 ist in seiner räumlichen Anordnung in der Rotorwelle 16 von dem Bereich der Schneckenverzahnung 24 abgetrennt. Der Rotor 31 sitzt dabei in einem Ventilgehäuseinnenraum 33, der mit Kühlmittel, welches zur Kühlung einer Brennkraftmaschine dient, gefüllt ist.

Der Rotor 31 wird radial an seinen beiden Enden durch zwei radiale Lagerelemente 7, 15 gelagert. Die Lagerflächen des Rotors 31 sind im Bereich der Lagerelemente 7, 15 gehärtet, um einen erhöhten Verschleiß der Rotorwelle im Bereich der Lagerelemente 7, 15 zu vermeiden. Axial wird der Rotor 31 durch ein erstes axiales Lagerelement 4 am oberen Ende des Rotors 31 im Bereich des Blechpakets 10 und durch ein zweites axiales Lagerelement 36 am Ende der Rotorwelle 16 im Bereich der Schneckenverzahnung 24 gelagert. Das zweite axiale Lagerelement 36 ist einteilig zusammen mit dem radialen Lagerelement 15 ausgeführt. Hierdurch wird die axiale Beweglichkeit des Rotors 31 begrenzt. Durch eine Brennkraftmaschine werden sinusförmige Schwingungen mit einer Frequenz von bis zu 400Hz in das Steuerventil 1 eingekoppelt. Dadurch werden die beweglichen Teile vor allem der Rotor 31 des Steuerventils 1 in Schwingungen versetzt. Üblicherweise weisen die axialen Lagerelemente 4, 36 einen Abstand zueinander auf, der toleranzbehaftet ist und in dem sich der Rotor 31 frei bewegen kann, sodass der Rotor 31 durch Anregung der von der Brennkraftmaschine emittierten Schwingungen ebenso in Schwingung zwischen den beiden axialen Lagerelementen 4, 36 gerät. Um den an den axialen Lagerelementen 4, 36 entstehenden höheren Verschleiß zu reduzieren, ist in der Ausführungsform zumindest ein der beiden axialen Lagerelemente 4, 36, in Fig. 1 das erste Lagerelement 4, vorgespannt. Die Vorspannung wird durch eine Feder 2 am ersten axialen Lagerelement 4 eingebracht indem die Feder 2 sich rückseitig in einem ersten Ventilgehäuseteil 5 abstützt. Die Federsteifigkeit der Feder 2 ist dabei so ausgelegt, dass die Feder 2 ein Last von etwa dem 15 bis 90-fachen Gewicht des Rotors 31 aufnehmen kann. Die Bandbreite der Federsteifigkeit ist bestimmt durch das Eigenfrequenzverhalten des Rotors 31 und dem Frequenzbereich der Brennkraftmaschine. Durch die Auslegung der Federsteifigkeit der Feder 2 kann der Bereich der Eigenfrequenz des Rotors ausserhalb des Anregungsbereichs der Brennkraftmaschine verschoben werden. Dies hat den Vorteil, dass der Rotor 31 ruhig in dem zweiten Ventilgehäuseteil 13 gelagert ist und dadurch der Verschleiss der Schneckenverzahnung 24 und der axialen Lagerelemente 4, 36 reduziert ist.

Das erste axiale Lagerelement 4 weist auf der zur Feder 2 zugewandten Seite im ersten Ventilgehäuseteil 5 einen Anschlag 27 auf, der die axiale Hubbewegung der Rotorwelle 16 und des ersten axialen Lagerelements 4 begrenzt. Dies verhindert zuverlässig ein Überdrücken der Feder 2 und begrenzt die Hubbewegungen des Rotors 31. Das erste Ventilgehäuseteil 5 weist des Weiteren eine radiale Lageraufnahme 6 auf, in der das erste radiale Lager 7 angeordnet ist. Das erste radiale Lager 7 ist wie das zweite radiale Lager 15 bevorzugterweise aus einem hochfestem Kunststoff, insbesondere aus einem PTFE-Kunstoff gefertigt. Es eignen sich jedoch auch andere Kunststoffe oder Metalle für die radialen Lagerelemente 7, 15. Das erste Ventilgehäuseteil 5 verschließt einen Ventilgehäuseinnenraum 33 mittels eines Dichtelements 8 gegenüber der Umgebung.

Des Weiteren ist im Ventilgehäuseinnenraum 33 ein Stator 32 angeordnet, der mittels einer Mehrzahl von Spulen 12 ein wechselndes Magnetfeld im Ventilgehäuseinnenraum 33 aufbaut. Die Spulen 12 werden hierzu elektronisch kommutiert, sodass durch das wechselnde Magnetfeld der Rotor 31 in Rotation um die Rotorwellenachse 26 versetzt wird. Durch die Drehbewegung des Rotors 31 wird über eine Schneckenverzahnung 24 ein nicht dargestelltes Stirnrad angetrieben, welches mit einer Steuerscheibe 21 verbunden ist. Die Steuerscheibe 21 weist zumindest eine Öffnung 20 auf, durch die der Kühlmittelstrom beschränkt wird. Durch ein Verdrehen der Steuerscheibe 21 gegenüber einen Einlasskanal 34 wird der Kühlmittelstrom reguliert. Der Raum der Steuerscheibe 21 wird seitlich begrenzt durch ein drittes Ventilgehäuseteil 17, welches durch ein zweites Dichtelement 18 den Raum der Steuerscheibe 21 gegenüber der Umgebung abschließt.

Bei Rotation des Rotors 31 werden durch die Verdrehung der Schneckenverzahnung 24 Kräfte in den Rotor 31 eingeleitet. Diese stützen sich je nach Drehrichtung der Schneckenverzahnung 24 entweder in axialer Richtung im zweiten axialen Lagerelement 36 oder im ersten axialen Lagerelement 4 in Verbindung mit der Feder 2 und dem Anschlag 27 ab. Die radial durch die Schneckenverzahnung 24 in den Rotor 31 eingebrachten Kräfte stützen sich insbesondere im zweiten radialen Lagerelement 15 ab.

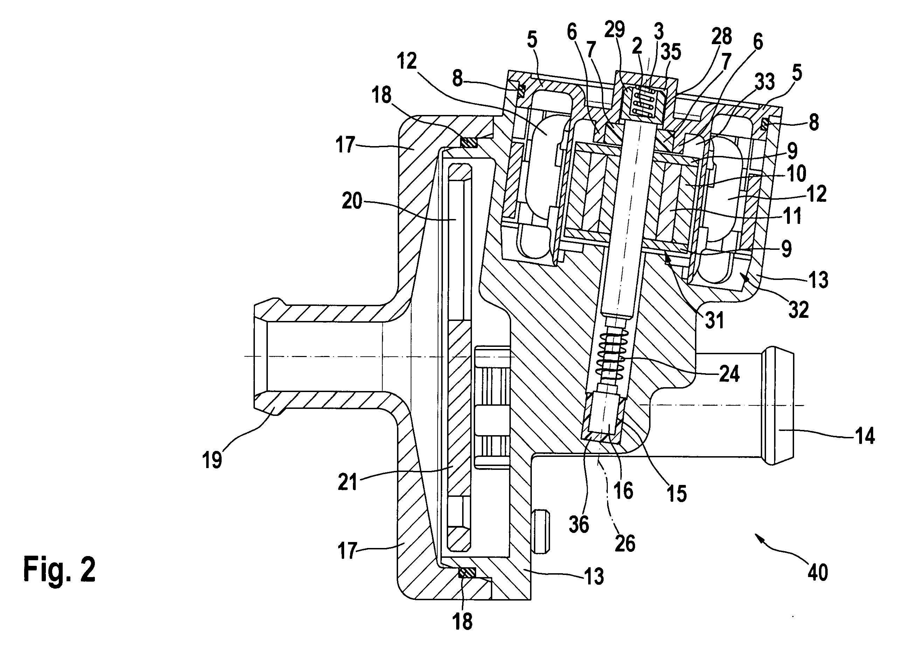

Fig. 2 zeigt eine schematische Schnittansicht eines Steuerventils 40 gemäß einer zweiten Ausführungsform der Erfindung. Das Steuerventil 40 ist in seinem Aufbau und seiner Funktionsweise ähnlich zu dem in Fig. 1 gezeigten Steuerventil. Jedoch unterscheidet sich das Steuerventil 40 insbesondere im Bereich des dritten axialen Lagerelements 29, welches im Gegensatz zum Fig. 1 gezeigten ersten axialen Lagerelements 4 nicht plattenförmig, sondern topfförmig ausgeführt ist. Auf diese Weise wird die Feder 2 überwiegend umfasst. Eine andere Ausgestalltung z.B. mit einer konkaven oder konvexen Kontur des axialen Lagerelements ist ebenso denkbar. Des Weiteren entfällt der in Fig. 1 gezeigte Anschlag 27. Stattdessen schlägt das dritte axiale Lagerelement 29 an einer Innenfläche des ersten Ventilgehäuseteils 5 an.

Durch die topfförmige Ausgestaltung des dritten axialen Lagerelements 29 bildet sich auf der federzugewandten Seite des dritten axialen Lagerelements 29 ein Hohlraum 35 aus, der zumindest teilsweise mit Kühlmittel aus dem Ventilgehäuseinnenraum 33 gefüllt ist. Der Hohlraum 35 ist mit einem Spalt 28 zwischen den Umfangsflächen des dritten Lagerelements 29 und den Innenflächen des zylinderförmigen ausgeprägten Bereich des ersten Ventilgehäuseteils 5 mit dem Gehäuseinnenraum verbunden.

Wird der Rotor 31 durch Schwingungen der Brennkraftmschine zu einer Verschiebung entlang seiner Rotorwellenachse 26 insbesondere im Bereich seiner Eigenfrequenzen angeregt, so variiert das Volumen des Hohlraums 35. Dabei wird zum Ausgleich aus dem Ventilgehäuseinnenraum 33 Kühlmittel angesaugt, bzw. aus dem Hohlraum 35 verdrängt. Dabei strömt Kühlmittel durch einen Spalt 28, der als Drossel fungiert, und setzt die kinetische Energie des Rotors 31 in einen Wärmeeintrag in des Kühlmittel um. Dadurch wird die Bewegung des Rotors 31 gedämpft und die kinetische Energie des Rotors 31 wird nicht ausschließlich, wie in Fig. 1 gezeigt, der Feder 2 zugeführt, sondern zumindest teilweise in Wärme umgewandelt. Nach einer Bewegung des Rotors 31 gegen das dritte Lagerelement 29 füllt sich der Hohlraum 35 selbstständig mit Kühlmittel bei der nächsten Entlastung des ersten axialen Lagerelements 4 in einer unterseitigen Bewegung des Rotors 31. Der Hohlraum 35 arbeitet zusammen mit dem Spalt 28 und der Feder 2 in der Ausführungsform als ein Feder-Dämpfer-Element, welches einfach und zuverlässig die kinetische Energie des Rotors 31 reduziert.

In einer bevorzugten Ausführungsform weist der Spalt 28 eine Breite von etwa 0,01 bis 0,1 mm auf, wobei die Breite des Spaltes 28 abhängig von der Dimensionierung der Feder 2 sowie des Hohlraums 35 und den gewünschten Dämpfereigenschaften ist. Durch die Feder 2 werden je nach Federsteifigkeit die Eigenfrequenzen aus dem Anregungsbereich der Brennkraftmaschine verschoben, sodass der Rotor 31 schwingungsfest in dem Steuerventil 1 sitzt. Durch die Dämpfungseigenschaften des dritten Lagerelements 29 kann insbesondere das Verhalten des Rotors bei Resonanzfrequenzen beieinflusst werden, wobei die Schwingungsamplitude des Rotors im Resonanzbereich schwächer ausgeprägt und schneller abklingt, als bei der in Fig. 1 gezeigten Ausführungsform des ersten Lagerelements 4.

Dem Fachmann ist selbstverständlich geläufig, dass die Anordnung der Feder bzw. des Feder-Dämpfer-Elements beispielhaft ist. Wesentlich dabei ist jedoch, dass der Rotor eines Steuerventils mittels einer Feder vorgespannt gelagert ist, wobei ein axiales Lager auch ein Dämpferelement aufweisen kann, um das Eigenfrequenzverhalten und das Verhalten bei Resonanzfrequenzen des Rotors eines Steuerventils dahingehend zu beeinflussen, dass der Rotor nur noch vermindert durch Schwingungen der Brennkraftmaschine zu Schwingungen anregbar ist.

## Patentansprüche

1. Steuerventil (1; 40) für einen Kühlkreislauf einer Brennkraftmaschine, aufweisend ein zweiteiliges Ventilgehäuse, wobei ein Ventilgehäuseteil (5, 13) einstückig mit einem Kühlmittel durchfluteten Ventilgehäuseinnenraum (33) ausgeführt ist und in dem Ventilgehäuseteil (5, 13) ein Rotor (31) angeordnet ist, wobei der Rotor (31) auf einer Rotorwelle (16) einen ersten Bereich mit einer Schneckenverzahnung (24) aufweist und einen zweiten Bereich mit einem Blechpaket (10) aufweist, wobei am Rotor (31) an den beiden Enden der Rotorwelle (16) zwei axiale Lagerelemente (4; 29, 36) angeordnet sind, **dadurch gekennzeichnet, dass** zumindest eines der axialen Lagerelemente (4; 29) durch eine Feder (2) vorgespannt in dem Ventilgehäuseteil (5, 13) angeordnet ist, wobei die Feder (2) in einem Hohlraum (35) angordnet ist, der mittels eines Spaltes (28) zwischen den Umfangsflächen des axialen durch die Feder (2) gespannten Lagerelements (4; 29) und des Ventligehausetells (5) mit dem Ventilgehäuseinnenraum (33) verbunden ist.

2. Steuerventil (40) nach Anspruch 1, **dadurch gekennzeichnet, dass** das axiale Lagerelement (29) die Feder (2) zumindest teilweise umfasst und topfförmig ausgebildet ist.

3. Steuerventil (1) nach Anspruch 1, **dadurch gekennzeichnet, dass** zumindest eines der axialen Lagerelemente (4) plattenförmig ausgeführt ist.

4. Steuerventil (1; 40) nach einem der Ansprüche 1 bis 3, **dadurch gekennzeichnet, dass** die Feder (2) dazu ausgelegt ist, etwa das 15 bis 90-fache der Masse des Rotors (31) auszunehmen

5. Steuerventil (1 ; 40) nach einem der Ansprüche 1 bis 4 **dadurch gekennzeichnet, dass** zumindest eines der axialen Lagerelemente (4; 29) über einen Anschlag (27) verfügt.

6. Steuerventil (1; 40) nach einem der Ansprüche 1 bis 5 **dadurch gekennzeichnet, dass** zumindest eines der axialen Lagerelemente (4; 29) verschiebbar angeordnet ist.

7. Steuerventil (1; 40) nach einem der Ansprüche 1 bis 5 **dadurch gekennzeichnet, dass** der Innenraum zumindest eines Ventilgehäuseteils (5, 13, 17) zumindest teilweise Kühlmittel des Kühlkreislaufes der Brennkraftmaschine aufweist.

## Claims

1. Control valve (1; 40) for a cooling circuit of an internal combustion engine, having a two-part valve housing, wherein one valve housing part (5, 13) is formed in one piece with a valve housing interior space (33) through which coolant flows, and in the valve housing part (5, 13) there is arranged a rotor (31), wherein the rotor (31) has, on a rotor shaft (16), a first region with a worm toothing (24) and a second region with a laminated core (10), wherein two axial bearing elements (4; 29, 36) are arranged on the rotor (31) at the two ends of the rotor shaft (16), **characterized in that** at least one of the axial bearing elements (4; 29) is arranged in the valve housing part (5, 13) under the preload of a spring (2), wherein the spring (2) is arranged in a cavity (35) which is connected to the valve housing interior space (33) via a gap (28) between the circumferential surfaces of the axial bearing element (4; 29), which is loaded by the spring (2), and of the valve housing part (5).

2. Control valve (40) according to Claim 1, **characterized in that** the axial bearing element (29) at least partially surrounds the spring (2) and is formed in the manner of a pot.

3. Control valve (1) according to Claim 1, **characterized in that** at least one of the axial bearing elements (4) is formed in the manner of a plate.

4. Control valve (1; 40) according to one of Claims 1 to 3, **characterized in that** the spring (2) is designed to accommodate approximately 15 to 90 times the mass of the rotor (31).

5. Control valve (1; 40) according to one of Claims 1 to 4, **characterized in that** at least one of the axial bearing elements (4; 29) has a stop (27).

6. Control valve (1; 40) according to one of Claims 1 to 5, **characterized in that** at least one of the axial bearing elements (4; 29) is arranged in a displaceable manner.

7. Control valve (1; 40) according to one of Claims 1 to 5, **characterized in that** the interior space of at least one valve housing part (5, 13, 17) at least partially has coolant of the cooling circuit of the internal combustion engine.

## Revendications

1. Soupape de commande (1 ; 40) pour un circuit de refroidissement d'un moteur à combustion interne, présentant un boîtier de soupape en deux parties, une partie du boîtier de soupape (5, 13) étant réalisée d'une seule pièce avec un espace interne de boîtier de soupape (33) parcouru par un réfrigérant et un rotor (31) étant disposé dans la partie du boîtier de soupape (5, 13), le rotor (31) présentant, sur un arbre de rotor (16), une première région avec une denture hélicoïdale (24) et une deuxième région avec un paquet de tôle (10), deux éléments de palier (4 ; 29, 36) axiaux étant disposés sur le rotor (31) au niveau des deux extrémités de l'arbre de rotor (16), **caractérisée en ce qu'**au moins l'un des éléments de palier axiaux (4 ; 29) est disposé de manière précontrainte par un ressort (2) dans la partie de boîtier de soupape (5, 13), le ressort (2) étant disposé dans une cavité (35) qui est connectée à l'espace interne du boîtier de soupape (33) au moyen d'une fente (28) entre les surfaces périphériques de l'élément de palier (4 ; 29) contraint par le ressort (2) et de la partie de boîtier de soupape (5).

2. Soupape de commande (40) selon la revendication 1, **caractérisée en ce que** l'élément de palier axial (29) comprend au moins en partie le ressort (2) et est réalisé en forme de pot.

3. Soupape de commande (1) selon la revendication 1, **caractérisée en ce qu'**au moins l'un des éléments de palier axiaux (4) est réalisé en forme de plaque.

4. Soupape de commande (1 ; 40) selon l'une quelconque des revendications 1 à 3, **caractérisée en ce que** le ressort (2) est conçu pour accepter approximativement 15 à 90 fois la masse du rotor (31).

5. Soupape de commande (1 ; 40) selon l'une quelconque des revendications 1 à 4, **caractérisée en ce qu'**au moins l'un des éléments de palier axiaux (4 ; 29) dispose d'une butée (27).

6. Soupape de commande (1 ; 40) selon l'une quelconque des revendications 1 à 5, **caractérisée en ce qu'**au moins l'un des éléments de palier axiaux (4 ; 29) est disposé de manière coulissante.

7. Soupape de commande (1 ; 40) selon l'une quelconque des revendications 1 à 5, **caractérisée en ce que** l'espace interne d'au moins une partie du boîtier de soupape (5, 13, 17) présente au moins en partie un réfrigérant du circuit de refroidissement du moteur à combustion interne.
